# EUROPEAN PATENT SPECIFICATION

(11) **EP 3 044 430 B1**
(45) Date of publication and mention of the grant of the patent: **25.03.2020**
(21) Application number: 14772536.0
(22) Date of filing: 11.09.2014
(51) Int. Cl.: F01D 25/16, F02K 3/06, F02C 3/107, F02C 7/32, F02C 7/36, F02C 1/06, F02C 6/00, F02C 3/34, F02C 6/08

(54) **INDUSTRIAL GAS TURBINE ENGINE**
INDUSTRIELLE GASTURBINE
MOTEUR DE TURBINE À GAZ INDUSTRIEL

(30) Priority: 12.09.2013 US 201361876962 P; 20.07.2014 US 201414335916
(43) Date of publication of application: 20.07.2016
(73) Proprietor: Florida Turbine Technologies, Inc., Jupiter, Florida 33458 (US)
(72) Inventor: BROSTMEYER, Joseph D., Jupiter, Florida 33347 (US); CEJKA, Justin T., Jupiter, Florida 33458 (US); JONES, Russell B., North Palm Beach, Florida 33408 (US)
(74) Representative: Tomkins & Co
(86) International application number: PCT/US2014/055186
(87) International publication number: WO 2015/038768

(56) References cited:
- EP-A2- 0 279 487
- US-A1- 2002 152 754
- US-A1- 2004 168 427
- US-A1- 2005 056 021
- US-A1- 2005 210 863
- US-A1- 2012 023 954
- US-A1- 2012 119 512

## Description

### FIELD OF THE INVENTION

The present invention relates generally to an industrial gas turbine engine, and more specifically to a twin spool industrial gas turbine engine with a low pressure spool that can be operated independently of the high pressure spool.

### BACKGROUND OF THE INVENTION

In a gas turbine engine, such as a large frame heavy-duty industrial gas turbine (IGT) engine, a hot gas stream generated in a combustor is passed through a turbine to produce mechanical work. The turbine includes one or more rows or stages of stator vanes and rotor blades that react with the hot gas stream in a progressively decreasing temperature. The efficiency of the turbine, and therefore the engine, can be increased by passing a higher temperature gas stream into the turbine. However, the turbine inlet temperature is limited to the material properties of the turbine, especially the first stage vanes and blades, and an amount of cooling capability for these first stage airfoils.

In an industrial gas turbine engine used for electrical power production, during periods of low electrical demand the engine is reduced in power. During periods of low electrical power demand, prior art power plants have a low power mode of 40% to 50% of peak load. At these low power modes, the engine efficiency is very low and thus the cost of electricity is higher than when the engine operates at full speed with the higher efficiency.

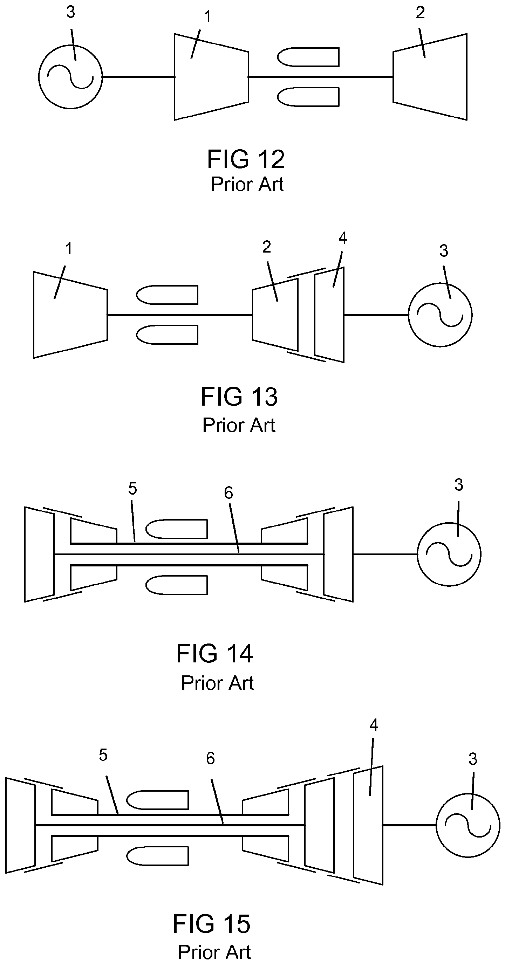

Industrial and marine gas turbine engines used today are shown in figures 12-15. These designs suffer from several major issues that include low component (compressor and turbine) performance for high cycle pressure ratios or low part load component efficiencies or high CO (carbon monoxide) emissions at part load when equipped with low NOx combustors which limit the low power limit at which they are allowed to operate (referred to as the turn-down ratio).

Figure 12 shows a single shaft IGT engine with a compressor 1 connected to a turbine 2 with a direct drive electric generator 3 on the compressor end. Figure 13 shows a dual shaft IGT engine with a high spool shaft and a separate power turbine 4 that directly drives an electric generator 3. Figure 14 shows a dual shaft aero derivative gas turbine engine with concentric spools in which a high pressure spool rotates around the low pressure spool, and where a separate low pressure shaft that directly drives an electric generator 3. Figure 15 shows a three-shaft IGT engine with a low pressure spool rotating within a high pressure spool, and a separate power turbine 4 that directly drives an electric generator 3.

The configuration of Figure 12 IGT engine is the most common for electric power generation and is limited by non-optimal shaft speeds for achieving high component efficiencies at high pressure ratios. The mass flow inlet and exit capacities are limited structurally by AN² (last stage blade stress) and tip speeds that limit inlet and exit diameters due to high tip speed induced Mach # losses in the flow. Therefore for a given rotor speed, there is a maximum inlet diameter and corresponding flow capacity for the compressor and exit diameter and flow capacity for the turbine before the compressor and turbine component efficiencies start to drop off due to high Mach number losses.

Since there is a fixed maximum inlet flow at high pressure ratios on a single shaft, the rotor blades start to get very small in the high pressure region of the compressor flow path. The small blade height at a relatively high radius gives high losses due to clearance and leakage affects. High pressure ratio aircraft engines overcome this limitation by introduction of separate high pressure and low pressure shafts. The high pressure shaft turns at a faster speed allowing for smaller radius while still accomplishing a reasonable work per stage. An example for this is shown in Figure 14, which is typical of an aero-derivative gas turbine engine used for electrical power production. The speed of the high pressure spool is still limited by having a low speed shaft 6 inside the inner diameter (ID) of the high pressure shaft 5. This drives the high pressure shaft flow path to a higher radius relative to what might otherwise be feasible, which thereby reduces the speed of the high pressure rotor, creating smaller radius blades which reduce the efficiency of the high pressure spool. Figure 13 arrangement is similarly limited in achieving high component efficiencies at high pressure ratios as Figure 12 since the entire compressor is on one shaft.

Turn down ratio is the ratio of the lowest power load at which a gas turbine engine can operate (and still achieve CO emissions below the pollution limit) divided by the full 100% load power. Today's gas turbines have a turn down ratio of around 40%. Some may be able to achieve 30%. Low part load operation requires a combination of low combustor exit temperatures and low inlet mass flows. Low CO emissions require a high enough combustor temperature to complete the combustion process. Since combustion temperature must be maintained to control CO emissions, the best way to reduce power is to reduce the inlet mass flow. Typical single shaft gas turbine engines use multiple stages of compressor variable guide vanes to reduce inlet mass flow. The limit for the compressor flow reduction is around 50% for single shaft constant rotor speed compressors as in Figure 12. The Figure 14 arrangement is similarly limited as the Figure 12 arrangement in flow inlet mass flow reduction since the low pressure compressor runs the constant speed of the generator.

The Figure 15 arrangement is the most efficient option of the current configurations for IGT engines, but is not optimal because the low spool shaft 6 rotates within the high spool shaft 5, and thus a further reduction in the high spool radius cannot be achieved. In addition, if the speed of the low spool shaft 6 is reduced to reduce inlet mass flow, there is a mismatch of angle entering the LPT (Low Pressure Turbine) from the HPT (High Pressure Turbine) and mismatch of the flow angle exiting the LPT and entering the PT (Power Turbine) leading to inefficient turbine performance at part load.

### SUMMARY OF THE INVENTION

An industrial gas turbine engine according to claim 1 of the type used for electrical power production with a high pressure spool and a low pressure spool in which the two spools can be operated independently so that a turn-down ratio of as little as 12% can be achieved while still maintaining high efficiencies for the engine. An electric generator is connected directly to the high pressure spool and operates at a continuous and constant speed. The low pressure spool is driven by turbine exhaust from the high pressure spool and includes variable inlet guide vanes in order to regulate the speed of the low pressure spool. Compressed air from the low pressure spool is supplied to an inlet of the compressor of the high pressure spool. An interstage cooler can be used to decrease the temperature of the compressed air passed to the high pressure spool.

The twin spool IGT engine with separately operable spools can maintain high component efficiencies of the compressor and turbine at high pressure ratios of 40 to 55, which allow for increased turbine inlet temperatures while keeping the exhaust temperature within today's limits.

The turbine exhaust from both spools can be directed into a HRSG (heat recovery steam generator) to produce steam that is used to power a steam turbine that drives an electric generator to further increase the overall efficiency of the power plant.

In another embodiment, a fraction of the compressed air from the low pressure compressor is extracted and further compressed by a boost compressor and then delivered to a cooling circuit for the high pressure turbine stator vanes, where the heated cooling air is then discharged into the combustor.

In still another embodiment of the present invention, turbine exhaust from the high pressure spool is used to drive an intermediate pressure power turbine (IPPT) that is connected by a power shaft to an external load such as an electric generator, a gearbox, a compressor, or a ship propeller. The intermediate pressure power turbine shaft passes within the low pressure spool whereby the speed of the intermediate pressure power turbine shaft can be regulated by controlling the speed of the low pressure spool and thus regulating the mass flow amount of compressed air supplied from the low spool compressor to the high spool compressor. In this embodiment, the load is not connected to the high spool but to the intermediate pressure power turbine (IPPT).

With the design of the twin spool IGT engine of the present invention, a gas turbine combined cycle power plant can operate with a net thermal efficiency of greater than 67%, which is a significant increase over current engine thermal efficiencies.

In addition, current IGT engines used for electrical power production are limited to power output of around 350 MW due to size and mass flow constraints. With the twin spool design of the present invention, existing IGT engines can be retrofitted to operate at close to double the existing maximum power output.

Another benefit of the twin spool IGT engine is that a family of different sizes of prior art single spool IGT engines can be retrofitted by including the low pressure spool design of the present invention of varying size and pressure ratio that would supply compressed air to the high spool compressor.

Cooling air used to cool hot parts of a turbine is reintroduced into a combustor in which the cooling air is discharged into a diffuser located between an outlet of the compressor and an inlet of the combustor in order to prevent build-up of a boundary layer within the diffuser. In one embodiment of the diffuser, cooling air from the stator vanes is discharged parallel to the compressed air flow against an outer wall of the diffuser and cooling air from the rotor blades is discharged parallel to the compressor discharge against an inner wall of the diffuser and at a velocity equal to or greater than the velocity of the compressor discharge air so that boundary layer growth is limited.

### BRIEF DESCRIPTION OF THE DRAWINGS

A more complete understanding of the present invention, and the attendant advantages and features thereof, will be more readily understood by reference to the following detailed description when considered in conjunction with the accompanying drawings wherein:
Figure 1 shows a first embodiment of the gas turbine engine with turbine airfoil cooling of the present invention;
Figure 2 shows a second embodiment of the gas turbine engine with turbine airfoil cooling with inter-stage cooling of the present invention;
Figure 3 shows a third embodiment of the gas turbine engine with turbine airfoil cooling with inter-stage cooling of the present invention;
Figure 4 shows a fourth embodiment of the gas turbine engine with turbine airfoil cooling with inter-stage cooling associated with a HRSG for steam production of the present invention;
Figure 5 shows a diagram of a power plant with a first embodiment of a mechanically uncoupled twin spool industrial gas turbine engine of the present invention;
Figure 6 shows a diagram of a power plant with a second embodiment of a mechanically uncoupled twin spool industrial gas turbine engine of the present invention;
Figure 7 shows a diagram of a power plant with a third embodiment of a mechanically uncoupled twin spool industrial gas turbine engine of the present invention;
Figure 8 shows a diagram of a gas turbine engine with a fourth embodiment of a mechanically uncoupled twin spool industrial gas turbine engine of the present invention;
Figure 9 shows a cross sectional view of a power plant with a mechanically uncoupled three shaft industrial gas turbine engine of the present invention;
Figure 10 is a cross sectional view of a diffuser used between a compressor and a combustor in the gas turbine engine of the present invention;
Figure 11 is a cross sectional view of a second embodiment of a diffuser used between a compressor and a combustor in the gas turbine engine of the present invention;
Figure 12 shows a prior art single shaft spool IGT engine with a direct drive electric generator on the compressor end;
Figure 13 shows a prior art dual shaft IGT engine with a high spool shaft and a separate power turbine that directly drives an electric generator;
Figure 14 shows a prior art dual shaft aero gas turbine engine with concentric spools in which a high spool rotates around the low spool, and where a separate low pressure shaft that directly drives an electric generator; and
Figure 15 shows a prior art three-shaft IGT engine with a low pressure spool rotating within a high pressure spool, and a separate power turbine that directly drives an electric generator.

### DETAILED DESCRIPTION OF THE INVENTION

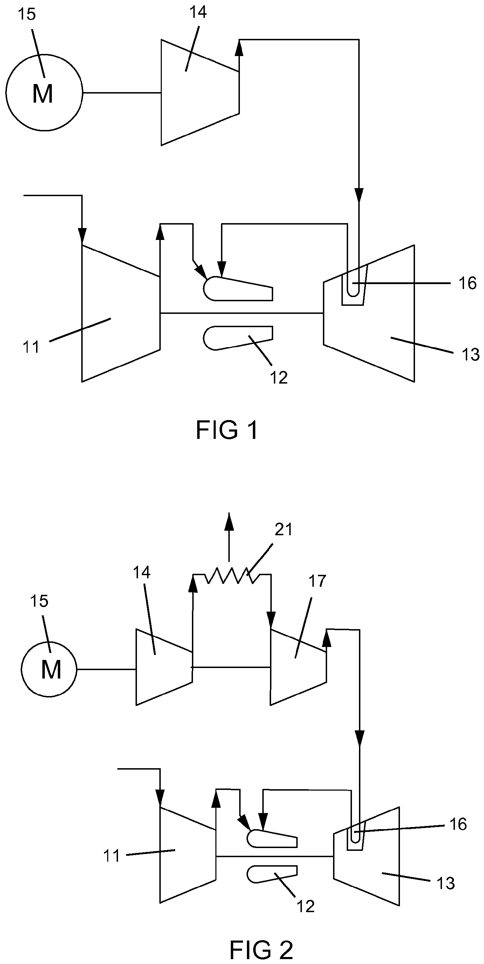

The present invention is a gas turbine engine with cooling of the turbine stator vanes. Figure 1 shows a first embodiment of the present invention with a gas turbine engine having a compressor 11, a combustor 12 and a turbine 13 in which the compressor 11 and the turbine 13 are connected together by a rotor shaft. The turbine 13 has a first stage of stator vanes 16 that are cooled. The compressor 11 compresses air that is then burned with a fuel in the combustor 12 to produce a hot gas stream that is passed through the turbine 13. A second compressor 14 is driven by a motor 15 to compress air at a higher pressure than from the first compressor 11. The higher pressure compressed air is then passed through the stator vanes 16 in the turbine 13 for cooling, and the heated cooling air is then passed into the combustor 12 to be combined with the fuel and the compressed air from the first compressor 11.

The second compressor 14 produces high pressure compressed air for cooling of the stator vanes 16 such that it can then be discharged into the combustor 12. Without the suitable higher pressure from the upper stage 14, the cooling air pressure discharged from the stator vanes would not be high enough pressure to pass into the combustor.

Figure 2 shows a second embodiment of the present invention in which the two stage (14, 17) compressor (i.e.: a multiple stage axial flow compressor) includes an inter-stage cooler 21 to cool the compressed air in order to increase the performance of the two stage compressor (14, 17). The compressed air from the two stage compressor (14, 17) and the inter-stage cooler 21 is then used to cool the stator vanes 16 which is then discharged into the combustor 12. The two stage compressor (14, 17) with the inter-stage cooler 21 produces a higher pressure cooling air than the first compressor 11 so that enough pressure remains after cooling of the stator vanes 16 to be discharged into the combustor 12.

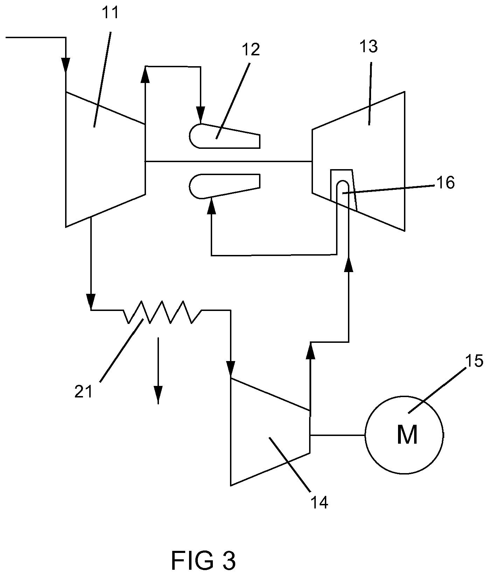

Figure 3 shows a third embodiment of the present invention where the cooling air for the stator vanes 16 is bled off from a later stage (after the first stage) of the first compressor 11, passed through an inter-stage cooler 21, and then enters a second compressor 14 to be increased in pressure. The higher pressure air from the second compressor 14 is then passed through the stator vanes 16 for cooling, and then discharged into the combustor 12.

In the three embodiments, the first or main compressor 11 provides approximately around 80% of the required air for the combustor 12. The second compressor 14 produces the remaining 20% for the combustor 12. In one industrial gas turbine engine studied, the first or main compressor 11 has a pressure ratio of 30 (that is, the outlet pressure is 30 times that of the inlet) while the second compressor 14 has a pressure ratio of 40 (that is, the outlet pressure is 40 times that of the inlet).

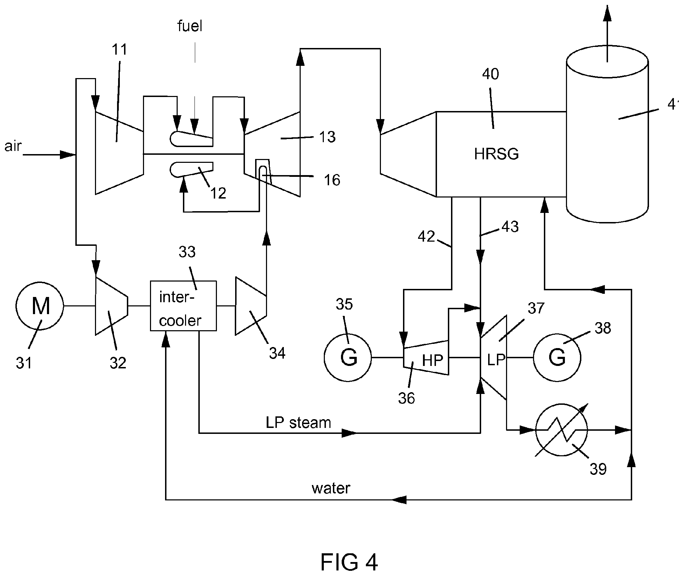

Figure 4 shows another embodiment of the present invention with turbine cooling and an intercooler heat recovery. The gas turbine engine includes a compressor 11, a combustor 12, and a turbine 13 in which a turbine airfoil such as a stator vane 16 is cooled. Fuel is introduced into the combustor 12 to produce a hot gas stream that is passed through the turbine 13. A secondary flow external compression takes place in first and second compressors 32 and 34 driven by a motor 31. An intercooler/low pressure steam generator 33 is positioned between two compressors 32 and 34 (or between stages of one compressor) to cool the compressed air. A motor 31 drives both compressors (or stages) 32 and 34 that compress air for use in cooling of the turbine airfoil 16.

The gas turbine 13 exhaust is used to produce steam in a Heat Recovery Steam Generator (HRSG) 40. The HRSG 40 produces high pressure (HP) steam 42 that is delivered to a high pressure turbine 36 to drive a first electric generator 35. The HRSG 40 also produces low pressure (LP) steam 43 that is combined with LP steam from the HP turbine exhaust that flows into a low pressure (LP) turbine 37 that drives a second electric generator 38. A stack 41 discharges the turbine exhaust after use in the HRSG 40. A condenser 39 condenses the steam discharged from the LP turbine 37 into water that then flows into the HRSG 40 or to the intercooler 33. Water that flows into the intercooler 33 is used to cool the compressed air discharged from the boost compressor 32 producing low pressure (LP) steam that then flows into the inlet of the LP turbine 37 along with the LP steam from the HRSG 40. As a result, the compressed air from the second compressor 34 has a lower temperature than without the use of an intercooler and therefore the cooling of the turbine airfoil 16 is improved. The cooling air from the turbine airfoil 16 is then discharged into the combustor 12 to be burned with fuel and produce the hot gas stream for the turbine 13.

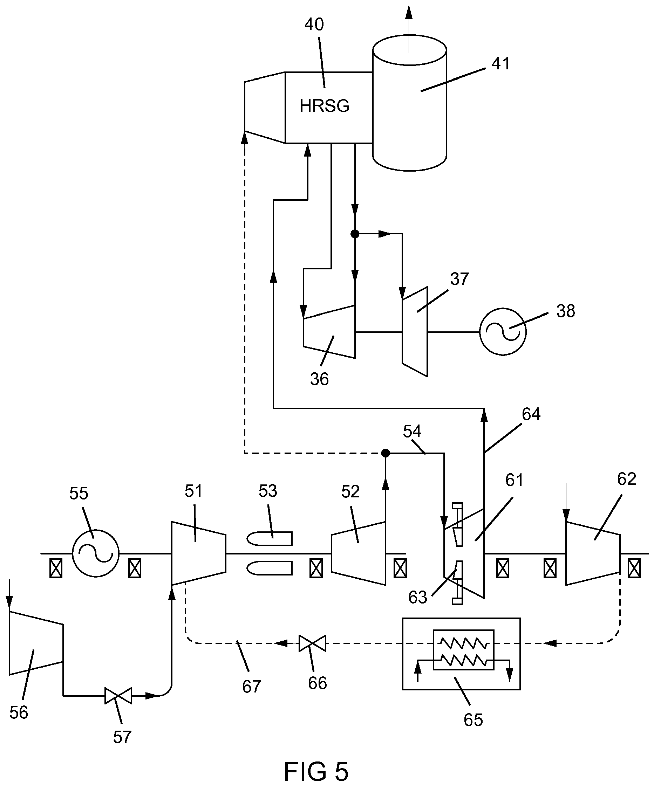

The embodiment of figure 5 is a high pressure ratio flexible industrial gas turbine engine with non-concentric spools in which the high pressure spool can be operated together or without the low pressure spool depending on the electrical power load. Figure 5 shows the power plant to include a main gas turbine engine with a high pressure compressor 51, a combustor 53, and a high pressure gas turbine 52 connected by a rotor shaft to an electric generator 55. The main engine (51, 52, 53) and the generator 55 are rotatably supported by bearings. In an option for supply of the inlet air to the high pressure compressor 51, the inlet of the main high pressure compressor 51 is connected to a boost compressor 56 through a valve 57. The high pressure compressor 51 and the high pressure turbine 52 are part of the high pressure spool.

A low pressure gas turbine 61 is connected to a low pressure compressor 62 by a rotor shaft which is supported by bearings. The low pressure compressor 62 includes an inlet guide vane and variable stator vanes allowing for modulating the compressed air flow. The low pressure gas turbine 61 and low pressure compressor 62 forms a low pressure spool and is non-concentric (can operate independently) with the main engine or high pressure spool 51 and 52. Similarly, the high pressure compressor can also include variable stator vanes that allow for flow matching and speed control. Thus, the low pressure spool 61 and 62 can be shut down and not be operated while the main engine or high speed spool 51 and 52 operates to drive the electric generator 55. An outlet of the low pressure compressor 62 is connected by a line 67 to an inlet of the high pressure compressor 51. An inter-cooler 65 can be used between the outlet of the low pressure compressor 62 and the inlet of the high pressure compressor 51 to cool the compressed air. A valve 66 can also be used in the line 67 for the compressed air from the low pressure compressor 62 to the high pressure compressor 51. Figure 5 shows the dashed inlet to the high pressure compressor 51 at a later stage, but could be located upstream from the first stage compressor blades.

Major advantages of the twin spool turbo-charged industrial gas turbine engine of the present invention (with one embodiment shown in figure 5) are described here. A large frame heavy duty industrial gas turbine engine of the prior art uses only a single spool with the rotor shaft directly connected to an electric generator. This design permits a large amount of power transfer to the generator without the need for a gearbox. Due to these factors, the gas turbine must operate with a very specific rotor speed equal to the synchronization speed of the local electrical power grid. By separating the components of the gas turbine into modular systems, each can then be individually optimized to provide maximum performance within an integrated system. Also, substantial power output and operability improvements can be realized.

The efficiency of the gas turbine is known to be largely a function of the overall pressure ratio. While existing IGTs limit the maximum compressor pressure ratio that can be achieved because optimum efficiency cannot be achieved simultaneously in the low and high pressure regions of the compressor while both are operating at the same (synchronous) speed, an arrangement that allows the low and high pressure compressors to each operate at their own optimum rotor speeds will permit the current overall pressure ratio barrier to be broken. In addition, segregating the low and high pressure systems is enabling for improved component efficiency and performance matching. For example, the clearance between rotating blade tips and outer static shrouds or ring segments of existing IGTs must be relatively large because of the size of the components in the low pressure system. In the present invention, the clearances in the high pressure system could be reduced to increase efficiency and performance.

The twin spool turbocharged IGT of the present invention enables a more operable system such that the engine can deliver higher efficiency at turn-down, or part power, and responsiveness of the engine can be improved. Further, this design allows for a greater level of turndown than is otherwise available from the prior art IGTs.

In yet another example, the power output and mass flow of prior art IGTs is limited by the feasible size of the last stage turbine blade. The length of the last stage turbine blade is stress-limited by the product of its swept area (A) and the square of the rotor speed (N). This is commonly referred to as the turbine AN². For a given rotor speed, the turbine flow rate will be limited by the swept area of the blade. If the rotor speed could be reduced, the annulus area could be increased, and the turbine can then be designed to pass more flow and produce more power. This is the essence of why gas turbines designed for the 50Hz electricity market, which turn at 3,000 rpm, can be designed with a maximum power output capability which is about 44% greater than an equivalent gas turbine designed for the 60Hz market (which turns at 3,600 rpm). If the gas turbine engine could be designed with modular components, a separate low pressure system comprising a low pressure compressor and turbine could be designed to operate at lower speeds to permit significantly larger quantities of air to be delivered to the high pressure (core) of the gas turbine.

In prior art IGTs, size and speed, AN², and limits on the last stage turbine blade eventually lead to efficiency drop-off as pressure ratio and turbine inlet temperatures are increased. In addition, as pressure ratio increases, compressor efficiency begins to fall off due to reduction in size of the back end of the compressor which leads to higher losses. At higher pressure ratios, very small airfoil heights relative to the radius from the engine centerline are required. This leads to high airfoil tip clearance and secondary flow leakage losses. The twin spool turbocharged IGT of the present invention solves these prior art IGT issues by increasing the flow size of a prior art large IGT up to a factor of 2. Normally, this flow size increase would be impossible due to turbine AN² limits. The solution of the present invention is to switch from single spool to double spool which allows for the last stage turbine blade to be designed at a lower RPM which keeps the turbine within typical limits. A conventional design of a dual spool engine would place the electric generator on the low spool, fixing the speed of the electric generator, and have a higher RPM high spool engine. With the twin spool turbocharged IGT of the present invention, the electric generator is located on the high spool, and has a variable speed low spool. This design provides numerous advantages. Since the low spool is untied from the grid frequency, a lower RPM than synchronous can be selected allowing the LPT to operate within AN² limits. Another major advantage is that the low spool RPM can be lowered significantly during operation which allows for a much greater reduction of engine air flow and power output than can be realized on a machine with a fixed low spool speed. The twin spool turbocharged IGT of the present invention maintains a higher combustion discharge temperature at 12% load than the prior art single spool IGT operating at 40% load. In the twin spool turbocharged IGT of the present invention; power was reduced by closing the inlet guide vanes on the high pressure compressor. Low and high pressure compressor aerodynamic matching was accomplished using a variable LPT vane which reduces flow area into the LPT, thus reducing low spool RPM.

A prior art single spool IGT is capable of achieving a low power setting of approximately 40-50% of max power. The twin spool turbocharged IGT of the present invention is capable of achieving a low power setting of around 12% of max power. This enhanced turndown capability provides a major competitive advantage given the requirements of flexibility being imposed on the electrical grid from variable power generation sources.

In Figure 5, a HRSG (Heat Recovery Steam Generator) 40 with stack 41 is used to take the exhaust gas from the gas turbines 52 and 61 through line 64 and produce steam for use in high pressure steam turbine 36 and low pressure steam turbine 37 that are both connected to drive a second electric generator 38. The exhaust finally is discharged through a stack 41. The dash line in figure 5 represents a direct connection from the exhaust of the high pressure gas turbine to the HRSG 40 which would bypass the low pressure gas turbine 61.

During periods of high electrical power demand, the main engine with the high pressure compressor 51 and high pressure gas turbine 52 is operated to drive the electric generator 55 with the gas turbine 52 exhaust going into the power or low pressure gas turbine 61 to drive the low pressure compressor 62. The exhaust from the low pressure gas turbine 61 then flows into the HRSG 40 to produce steam to drive the two steam turbines 36 and 37 that drive the second electric generator 38. The low pressure compressed air from the low pressure compressor 62 flows into the inlet of the high pressure compressor 51.

During periods of low electrical power demand, the low pressure gas turbine 61 and the low pressure compressor 62 is operated at low speed and the exhaust from the high pressure gas turbine 52 flows into the HRSG 40 through the low pressure gas turbine 61 and line 64 to produce steam for the two steam turbines 36 and 37 that drive the second electric generator 38 and thus keep the parts of the HRSG hot for easy restart when the engine operates at higher loads. Flow into the high pressure compressor 51 is reduced to 25% of the maximum flow. Thus, the main engine (51, 52, 53) can go into a very low power mode. The prior art power plants have a low power mode of 40% to 50% (with inlet guide vanes in the compressor) of peak load. The present invention can go down to 25% of peak load while keeping the steam temperature of the power plant hot (by passing the hot gas flow through) for easy restart when higher power output is required. The inter-cooler 65 can also include water injection to cool the low pressure compressed air.

At part power conditions between full power and the lowest power demand, it may be necessary to operate the low pressure compressor 62 and low pressure turbine 61 at an intermediate rotor speed. A means for controlling the engine is necessary in order to reduce low spool rotor speed without shutting off completely, while ensuring stable operation of the low pressure compressor 62 and high pressure compressor 51. Without a safe control strategy, part power aerodynamic mismatching of the compressor can lead to compressor stall and/or surge, which is to be avoided for safety and durability concerns. A convenient way to control the low rotor speed while correctly matching the compressors aerodynamically is by means of a variable low pressure turbine vane 63. Closing the variable low pressure turbine vane 63 at part power conditions reduces the flow area and flow capacity of the low pressure turbine 61, which subsequently results in a reduction of low pressure spool (61, 62) rotational speed. This reduction in rotor speed reduces the air flow through the low pressure compressor 62 which provides a better aerodynamic match with the high pressure compressor 51 at part power.

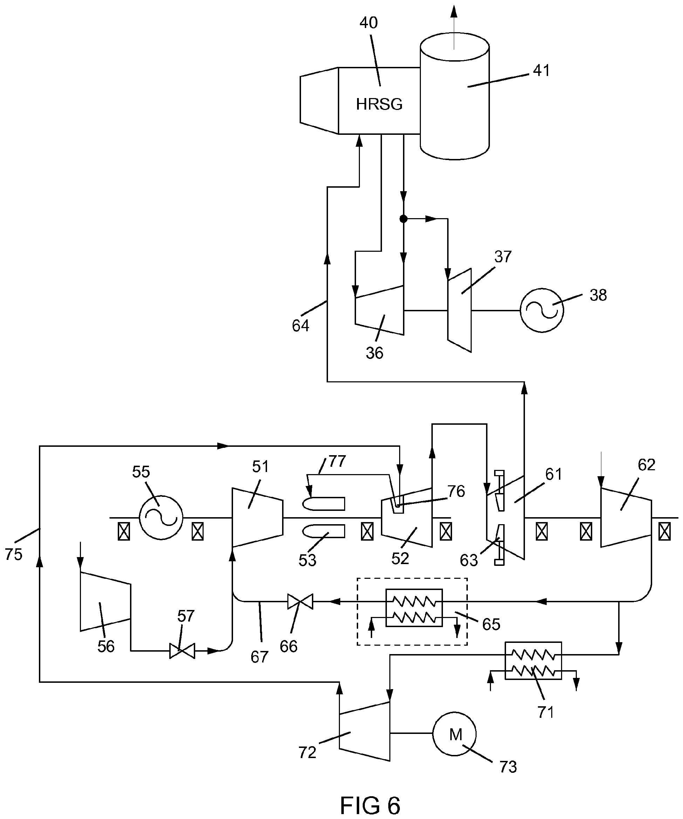

The embodiment of figure 6 is similar to that in figure 5 but with the addition of cooling air used for the high pressure turbine 52 stator vanes 76 that are then discharged into the combustor 53 of the high spool. To increase an overall efficiency of the electrical energy producing power plant of the present invention (Figure 6), some of the compressed air discharged from the low pressure compressor 62 can be passed through an inter-cooler 71, through a compressor 72 driven by a motor 73, through line 75 and then used to cool the stator vanes 76 in the high pressure gas turbine 52 of the high speed spool. This cooling air is then passed through line 77 and is discharged into the inlet of the combustor 53 and combined with the compressed air from the high pressure compressor 51 for combustion with a fuel to produce the hot gas flow used to drive the two gas turbines 52 and 61. The amount of compression produced by the compressor 72 is sufficient to overcome the pressure losses from cooling the stator vanes 76 and to maintain sufficient over-pressure to flow into the combustor 53. The LPC 62 flow not passed to the inter-cooler 71 is passed through an optional inter-cooler 65 along the path to the high pressure compressor 51 inlet.

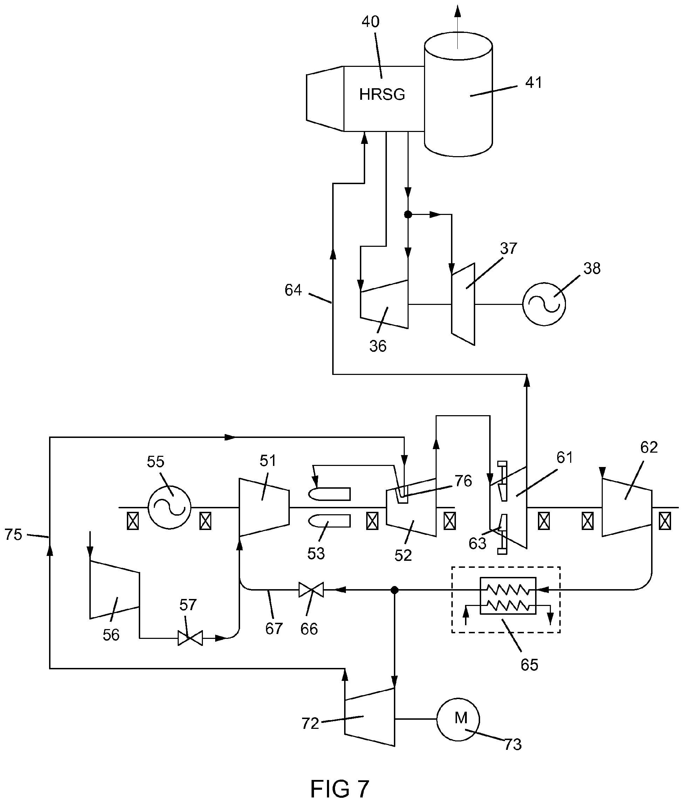

The embodiment of figure 7 is similar to the embodiment in figure 6 but with only one inter-cooler 65 used to cool the compressed air going into the high pressure compressor 51 and the stator vanes 76 of the high pressure turbine 52. A boost compressor 72 driven by a motor 73 is used to boost the pressure of the low pressure compressor 62 high enough to pass through the stator vanes 76 with enough pressure to flow into the combustor 53.

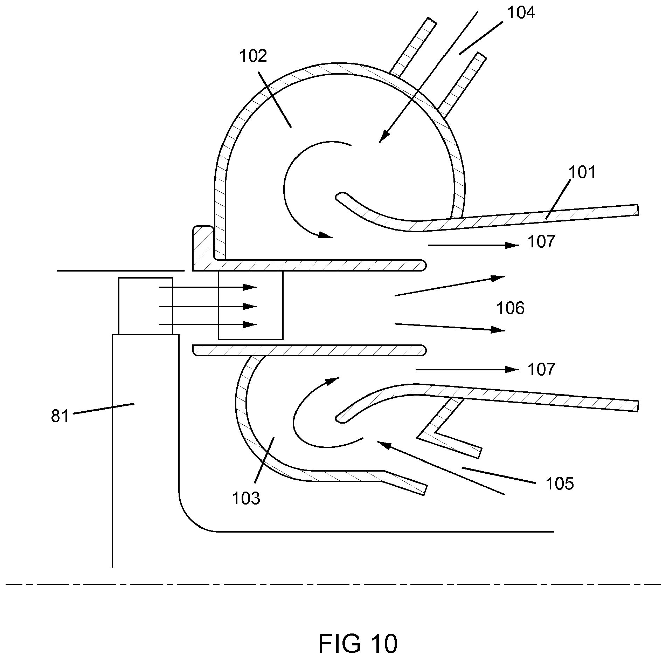

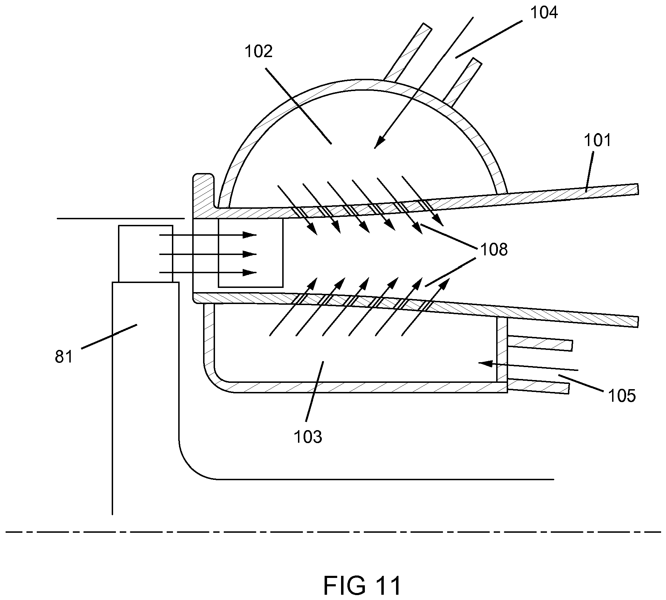

In the gas turbine engine embodiment of figures 6 and 7, the compressed air used to cool the stator vanes in the high pressure turbine is injected into the combustor 53. In a further embodiment of the present invention, a diffuser 101 (for example, as shown in Figures 10 and 11) is positioned between an outlet of the high pressure compressor 51 and an inlet of the combustor 53 that diffuses the compressed air flow. To control a boundary layer flow of the diffused air flow, the cooling air from the stator vanes 104 and from the rotor blades 105 of the high pressure turbine 52 is discharged into the diffuser to merge with the compressed air from the high pressure compressor 81 prior to entering the combustor 53. In the figure 10 embodiment, the cooling air from the stator vanes 76 is discharged into an outer plenum 102 surrounding the diffuser 101 that directs the cooling air flow in a direction parallel to the discharged compressed air 106 from the compressor 81. In a similar method, the cooling air from the rotor blades is discharged into an inner plenum 103 where the cooling air flows parallel to the discharged compressed air 106 from the compressor. The cooling air from the two plenums 102 and 103 is accelerated to a velocity equal to or greater than the velocity of the compressed air 106 from the compressor in order to prevent the boundary layer from forming.

Figure 11 shows a second embodiment of the diffuser 101 in which the cooling air flow from the stator vanes and the rotor blades is discharged into the diffuser 101 through an arrangement of film cooling holes 108.

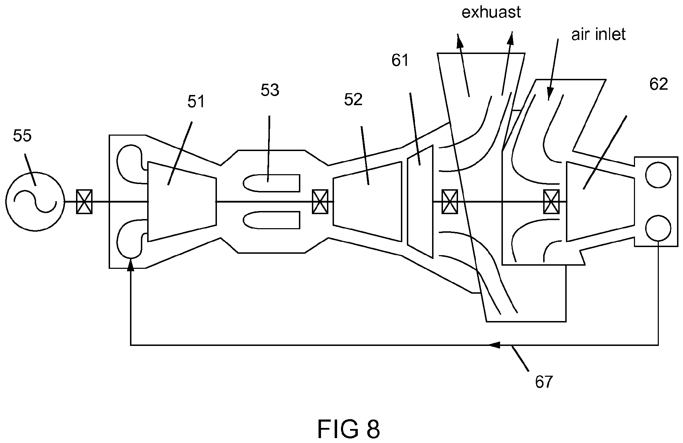

Figure 8 shows a cross sectional arrangement of a twin spool turbo-charged IGT for the present invention. The low pressure turbine 61 with variable area nozzle is located within a flow case just behind the exit from the high pressure turbine 52 so that the flow from the high pressure turbine flows directly into the low pressure turbine without loss. The rotor shaft from the LPT 61 to the LPC 62 passes through the case that forms the exhaust for the turbine hot gas and the inlet for the air into the LPC 62. The LPC 62 is connected by the line 67 to an inlet of the HPC 51. The high spool (with HPC 51 and HPT 52) directly drives an electric generator 55.

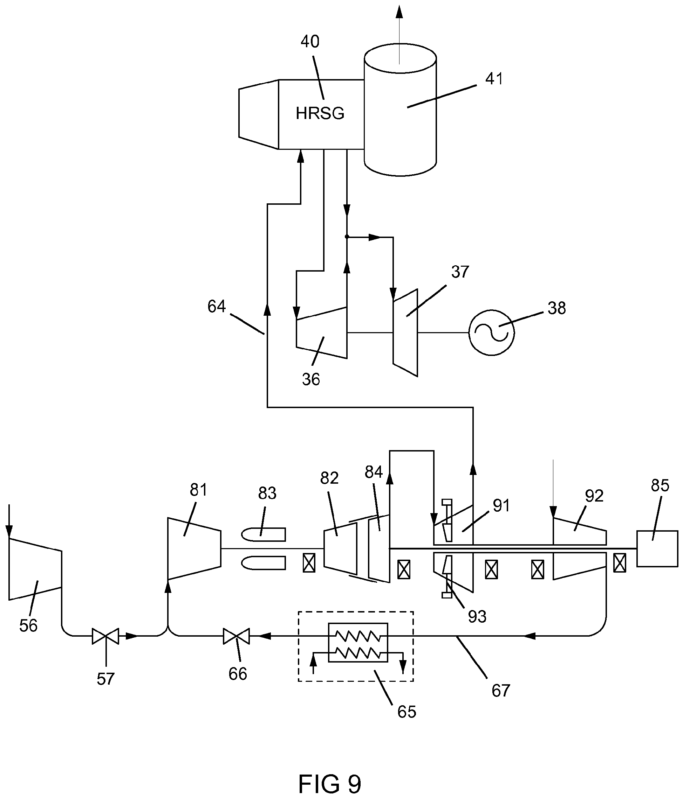

Figure 9 shows an embodiment of the present invention in which the power plant can be used to drive a load 85 where the load can be an electric generator or a compressor or a screw propeller for a ship. The power plant in figure 9 includes the high spool and the low spool like in previous embodiments, but with an intermediate pressure power turbine (IPPT) that is driven by exhaust from the HPT to drive the load 85 through a free shaft (FS). A high pressure compressor 81 is rotatably connected to a high pressure turbine 82 through a rotor with a combustor 83 located in-between to form the high spool. A low pressure turbine 91 is rotatably connected to a low pressure compressor 92 to form the low spool. The LPT includes variable inlet guide vanes or nozzles 93. The high pressure compressor 81 also has multiple variable stator vanes (VSV). An intermediate pressure power turbine (IPPT) 84 is located immediately downstream from the HPT 82 and is rotatably connected to the load 85 through a free shaft (FS) that passes through the inside of the rotor shaft of the low spool. A compressed air line 67 connects the outlet of the LPC 92 to an inlet of the HPC 81, and can include an inter-cooler 65. A boost compressor 56 can be used to supply low pressure compressed air to the HPC 81 when the low spool (91, 92) is running low. An optional HRSG 40 is connected to the LPT 91 exhaust to convert the turbine exhaust into steam and drive the high pressure steam turbine 36 and the low pressure steam turbine 37 that both drive the electric generator 38. The power turbine 84 and the HPT 82 are located within a case close to one another as are the LPT 61 and HPT 52 in figure 8. The HRSG might not be needed if the engine is used to propel a ship.

The twin spool IGT engine of figure 9 shows another novel arrangement which has many of the same attributes of figures 5-7 embodiments. However, the mechanical or generator load speed is allowed to operate independent of the gas turbine high pressure shaft speed via a low pressure shaft connected to the load. This independent load shaft speed attribute is usually most important for mechanical loads. The FS is still free to slow down for improved part load performance and low turndown to 12% load. Note, the low pressure shaft is passed through the ID of the FS since the FS runs at low speed and higher radius compared to the HP shaft. Thus, the HP shaft speed can remain high in this arrangement.

Options for the figure 9 power plant include: intercool the entire flow from the LPC 92 to the HPC 81; intercool only the compressed air that is used to cool the stator vanes in the HPT 82; and intercool only the cooling air used for the cooling of the stator vanes and over-pressurize the cooling air with a separate boost compressor. In all of the arrangements, a variable geometry HPC 81 is used to control speed along with the variable LPT vane 93.

It will be appreciated by persons skilled in the art that the present invention is not limited to what has been particularly shown and described herein above. In addition, unless mention was made above to the contrary, it should be noted that all of the accompanying drawings are not to scale. A variety of modifications and variations are possible in light of the above teachings without departing from the scope of the appended claims.

## Claims

1. A large frame heavy duty industrial gas turbine engine for electrical power production, the industrial gas turbine engine comprising:
a high pressure spool with a high pressure compressor (11) driven by a high pressure turbine (13), the high pressure compressor (11) having a row of variable inlet guide vanes;
a combustor (12) operable between the high pressure compressor and the high-pressure turbine;
an electric generator (55) directly coupled to the high pressure spool (51) in synchronous operation with a local area power grid; and
a low pressure spool (61) with a low pressure compressor (62) driven by a low pressure turbine (61), the high pressure spool and the low pressure spool being rotatably independent, the low pressure compressor being connected to the high pressure compressor to supply compressed air from the low pressure compressor to the high pressure compressor, the low pressure spool (61) being a turbocharger spool, the low pressure turbine (61) having a row of variable inlet guide vanes (63) and the low pressure compressor (62) having a row of variable inlet guide vanes.

2. The large frame heavy duty industrial gas turbine engine of claim 1, wherein the low pressure spool is not connected to an electric generator (55) and can be shut down during low power demand.

3. The large frame heavy duty industrial gas turbine engine for electrical power production of claim 1, further comprising an intercooler (33) to cool the compressed air from the low pressure compressor to the high pressure compressor.

4. The large frame heavy duty industrial gas turbine engine for electric power production of claim 1, and further comprising:
a boost compressor connected to the low pressure compressor, the boost compressor being connected to an airfoil cooling circuit of the high pressure turbine;
the airfoil cooling circuit of the high pressure turbine airfoil being connected to an inlet of the combustor; and
compressed air from the low pressure compressor being further compressed such that cooling air flows through the airfoil cooling circuit and then into the combustor.

5. The large frame heavy duty industrial gas turbine engine for electric power production of claim 1, and further comprising:
an intercooler (33) located between the low pressure compressor and the boost compressor to provide cooling of the compressed air.

6. The large frame heavy duty industrial gas turbine engine for electric power production of claim 1, and further comprising:
a heat recovery steam generator connected to an exhaust of the industrial gas turbine engine;
a low pressure steam turbine connected to the heat recovery steam generator; and
a second electric generator connected to the low pressure steam turbine.

7. The large frame heavy duty industrial gas turbine engine for electric power production of claim 1, and further comprising:
a diffuser on an outlet side of the high pressure compressor, the diffuser having an inlet for compressed air from the high pressure compressor and an inlet for the cooling air from the turbine airfoil cooling circuit with the cooling air being injected parallel to the compressed air from the high pressure compressor.

8. The large frame heavy duty industrial gas turbine engine as claimed in claim 1 further comprising:
an intermediate pressure turbine connected immediately downstream from the high pressure turbine and connected to a synchronous operating electric generator by an intermediate rotor shaft;
the low pressure turbine being driven by exhaust from the intermediate pressure turbine, and the intermediate rotor shaft being concentric to and rotating within the low pressure spool;
an outlet of the low pressure compressor connected to an inlet of the high pressure compressor to supply compressed air to the high pressure compressor.

9. The large frame heavy duty industrial gas turbine engine for electric power production as claimed in claim 1, wherein the industrial gas turbine engine is a 50 hertz engine with a power output of at least 750 MW.

10. The large frame heavy duty industrial gas turbine engine for electric power production as claimed in claim 1, wherein the industrial gas turbine engine is a 60 hertz engine with a power output of at least 500 MW.

11. The large frame heavy duty industrial gas turbine engine as claimed in claim 1 further comprising:
a compressed air line fluidly connecting the low pressure compressor to the high pressure compressor to supply compressed air from the low pressure compressor to the high pressure compressor;
a stator vane cooling circuit connected to the compressed air line downstream from the intercooler and passing through a row of stator vanes in the high pressure turbine;
a rotor blade cooling circuit connected to the compressed air line downstream from the intercooler and passing through a row of rotor blades in the high pressure turbine;
a boost compressor located between the low pressure compressor and the stator vane cooling circuit and the rotor blade cooling circuit; and
a diffuser located between an outlet of the high pressure compressor and an inlet of the combustor, the diffuser having an inner plenum and an outer plenum separated by a compressed air passage from the outlet of the high pressure compressor, the stator vane cooling circuit discharges into the outer plenum, the rotor blade cooling circuit discharges into the inner plenum, and cooling air from the inner plenum and the outer plenum flowing substantially parallel to the compressed air from the high pressure compressor into the combustor.

12. The large frame heavy duty industrial gas turbine engine for electric power production of as claimed in claim 1, wherein the low pressure spool and the high pressure spool are capable of operating at speeds independent of one another.

## Patentansprüche

1. Industrielles Hochleistungs-Gasturbinentriebwerk für Großanlagen zur Erzeugung von elektrischer Energie, bestehend aus einem industriellen Gasturbinentriebwerk, das Folgendes aufweist:
Einen Hochdruckrotor mit einem Hochdruckverdichter (11), der von einer Hochdruckturbine (13) angetrieben wird, wobei der Hochdruckverdichter (11) eine Reihe von variablen Einlass-Leitschaufeln aufweist;
eine Brennkammer (12), die betriebsmäßig zwischen dem Hochdruckverdichter und der Hochdruckturbine angeordnet ist;
einen elektrischen Generator (55), der direkt mit dem Hochdruckrotor (51) gekoppelt ist, im Synchronbetrieb mit einem lokalen Stromnetz; und
einen Niederdruckrotor (61) mit einem Niederdruckverdichter (62), der von einer Niederdruckturbine (61) angetrieben wird, wobei der Hochdruckrotor und der Niederdruckrotor unabhängig voneinander drehbar sind, wobei der Niederdruckverdichter mit dem Hochdruckverdichter verbunden ist, um Druckluft vom Niederdruckverdichter zum Hochdruckverdichter zu liefern, wobei der Niederdruckrotor (61) ein Turboladerrotor ist, wobei die Niederdruckturbine (61) eine Reihe von variablen Einlass-Leitschaufeln (63) aufweist und der Niederdruckverdichter (62) eine Reihe von variablen Einlass-Leitschaufeln aufweist.

2. Industrielles Hochleistungs-Gasturbinentriebwerk für Großanlagen nach Anspruch 1, wobei der Niederdruckrotor nicht mit einem elektrischen Generator (55) verbunden ist und bei geringem Leistungsbedarf abgeschaltet werden kann.

3. Industrielles Hochleistungs-Gasturbinentriebwerk für Großanlagen zur Erzeugung von elektrischer Energie nach Anspruch 1, mit einem Zwischenkühler (33) zur Kühlung der Druckluft vom Niederdruckverdichter zum Hochdruckverdichter.

4. Industrielles Hochleistungs-Gasturbinentriebwerk für Großanlagen zur Erzeugung von elektrischer Energie nach Anspruch 1, ferner aufweisend:
einen Booster-Verdichter der mit dem Niederdruckverdichter verbunden ist, wobei der Booster-Verdichter an einen Schaufel-Kühlkreis der Hochdruckturbine angeschlossen ist;
wobei der Schaufel-Kühlkreis der Hochdruckturbinenschaufel mit einem Einlass der Brennkammer verbunden ist; und
wobei Druckluft aus dem Niederdruckverdichter weiter verdichtet wird, so dass Kühlluft durch den Schaufel-Kühlkreis und dann in die Brennkammer strömt.

5. Industrielles Hochleistungs-Gasturbinentriebwerk für Großanlagen zur Erzeugung von elektrischer Energie nach Anspruch 1, ferner aufweisend:
einen Zwischenkühler (33), der zwischen dem Niederdruckverdichter und dem Booster-Verdichter angeordnet ist, um eine Kühlung der Druckluft vorzusehen.

6. Industrielles Hochleistungs-Gasturbinentriebwerk für Großanlagen zur Erzeugung von elektrischer Energie nach Anspruch 1, ferner aufweisend:
einen Wärmerückgewinnungs-Dampferzeuger, der mit einem Auslass des industriellen Gasturbinentriebwerks verbunden ist;
eine Niederdruck-Dampfturbine, die mit dem Wärmerückgewinnungs-Dampferzeuger verbunden ist; und
einen zweiten elektrischen Generator, der mit der Niederdruck-Dampfturbine verbunden ist.

7. Industrielles Hochleistungs-Gasturbinentriebwerk für Großanlagen zur Erzeugung von elektrischer Energie nach Anspruch 1, ferner aufweisend:
einen Diffusor an einer Auslassseite des Hochdruckverdichters, wobei der Diffusor einen Einlass für Druckluft aus dem Hochdruckverdichter und einen Einlass für die Kühlluft aus dem Turbinen-Schaufel-Kühlkreis aufweist, wobei die Kühlluft parallel zu der Druckluft aus dem Hochdruckverdichter eingeführt wird.

8. Industrielles Hochleistungs-Gasturbinentriebwerk für Großanlagen nach Anspruch 1, ferner aufweisend:
eine Mitteldruckturbine, die unmittelbar stromabwärts bezüglich der Hochdruckturbine verbunden ist und über eine Zwischenrotorwelle mit einem synchron arbeitenden elektrischen Generator verbunden ist;
wobei die Niederdruckturbine durch Abgas der Mitteldruckturbine angetrieben wird und die Zwischenrotorwelle konzentrisch zum Niederdruckrotor ist und sich in diesem dreht;
wobei ein Auslass des Niederdruckverdichters mit einem Einlass des Hochdruckverdichters verbunden ist, um Druckluft an den Hochdruckverdichter zu liefern.

9. Industrielles Hochleistungs-Gasturbinentriebwerk für Großanlagen zur Erzeugung von elektrischer Energie nach Anspruch 1, wobei das industrielle Gasturbinentriebwerk ein 50-Hertz-Triebwerk mit einer Ausgangsleistung von wenigstens 750 MW ist.

10. Industrielles Hochleistungs-Gasturbinentriebwerk für Großanlagen zur Erzeugung von elektrischer Energie nach Anspruch 1, wobei das industrielle Gasturbinentriebwerk ein 60-Hertz-Triebwerk mit einer Ausgangsleistung von wenigstens 500 MW ist.

11. Industrielles Hochleistungs-Gasturbinentriebwerk für Großanlagen nach Anspruch 1, ferner aufweisend:
eine Druckluftleitung, die den Niederdruckverdichter strömungstechnisch mit dem Hochdruckverdichter verbindet, um Druckluft vom Niederdruckverdichter zum Hochdruckverdichter zu liefern;
einen Statorschaufel-Kühlkreis, der stromabwärts bezüglich des Zwischenkühlers mit der Druckluftleitung verbunden ist und durch eine Reihe von Statorschaufeln in der Hochdruckturbine verläuft;
einen Rotorschaufel-Kühlkreis, der stromabwärts bezüglich des Zwischenkühlers mit der Druckluftleitung verbunden ist und durch eine Reihe von Rotorschaufeln in der Hochdruckturbine verläuft;
einen Booster-Verdichter, der zwischen dem Niederdruckverdichter und dem Statorschaufel-Kühlkreis und dem Rotorschaufel-Kühlkreis angeordnet ist; und
einen Diffusor, der zwischen einem Auslass des Hochdruckverdichters und einem Einlass der Brennkammer angeordnet ist, wobei der Diffusor ein inneres Plenum und ein äußeres Plenum aufweist, das durch einen Druckluftdurchlass vom Auslass des Hochdruckverdichters getrennt ist, wobei der Statorschaufel-Kühlkreis in das äußere Plenum mündet, der Rotorschaufel-Kühlkreis in das innere Plenum mündet, und Kühlluft aus dem inneren Plenum und dem äußeren Plenum im Wesentlichen parallel zu der Druckluft aus dem Hochdruckverdichter in die Brennkammer strömt.

12. Industrielles Hochleistungs-Gasturbinentriebwerk für Großanlagen zur Erzeugung von elektrischer Energie nach Anspruch 1, wobei der Niederdruckrotor und der Hochdruckrotor geeignet sind bei voneinander unabhängigen Geschwindigkeiten zu arbeiten.

## Revendications

1. Moteur de turbine à gaz industriel à usage intensif et à large châssis destiné à une production d'électricité, le moteur de turbine à gaz industriel comprenant :
une bobine à haute pression avec un compresseur à haute pression (11) entraîné par une turbine à haute pression (13), le compresseur à haute pression (11) ayant une rangée d'aubes directrices d'entrée orientables ;
une chambre de combustion (12) qui peut fonctionner entre le compresseur à haute pression et la turbine à haute pression ;
un générateur électrique (55) directement relié à la bobine à haute pression (51) de manière synchrone avec un réseau d'électricité local ; et
une bobine à basse pression (61) avec un compresseur à basse pression (62) entraîné par une turbine à basse pression (61), la bobine à haute pression et la bobine à basse pression étant indépendantes sur le plan rotatif, le compresseur à basse pression étant relié au compresseur à haute pression afin de fournir de l'air comprimé depuis le compresseur à basse pression vers le compresseur à haute pression, la bobine à basse pression (61) étant une bobine de turbocompresseur, la turbine à basse pression (61) ayant une rangée d'aubes directrices d'entrée orientables (63) et le compresseur à basse pression (62) ayant une rangée d'aubes directrices d'entrée orientables.

2. Moteur de turbine à gaz industriel à usage intensif et à large châssis selon la revendication 1, dans lequel la bobine à basse pression n'est pas reliée à un générateur électrique (55) et peut être arrêtée en cas de faible demande d'énergie.

3. Moteur de turbine à gaz industriel à usage intensif et à large châssis destiné à une production d'électricité selon la revendication 1, comprenant en outre un refroidisseur (33) destiné à refroidir l'air comprimé entre le compresseur à basse pression et le compresseur à haute pression.

4. Moteur de turbine à gaz industriel à usage intensif et à large châssis destiné à une production d'électricité selon la revendication 1, et comprenant en outre :
un compresseur de suralimentation relié au compresseur à basse pression, le compresseur de suralimentation étant relié à un circuit de refroidissement de profil de la turbine à haute pression ;
le circuit de refroidissement de profil du profil de turbine à haute pression étant relié à une admission de la chambre de combustion ; et
l'air comprimé provenant du compresseur à basse pression étant en outre comprimé de sorte que de l'air de refroidissement circule dans le circuit de refroidissement de profil puis dans la chambre de combustion.

5. Moteur de turbine à gaz industriel à usage intensif et à large châssis destiné à une production d'électricité selon la revendication 1, et comprenant en outre :
un refroidisseur (33) situé entre le compresseur à basse pression et le compresseur de suralimentation afin d'assurer le refroidissement de l'air comprimé.

6. Moteur de turbine à gaz industriel à usage intensif et à large châssis destiné à une production d'électricité selon la revendication 1, et comprenant en outre :
un générateur de vapeur à récupération de chaleur relié à un échappement du moteur de turbine à gaz industriel ;
une turbine à vapeur à basse pression reliée au générateur de vapeur à récupération de chaleur ; et
un second générateur électrique relié à la turbine à vapeur à basse pression.

7. Moteur de turbine à gaz industriel à usage intensif et à large châssis destiné à une production d'électricité selon la revendication 1, et comprenant en outre :
un diffuseur sur un côté d'évacuation du compresseur à haute pression, le diffuseur ayant une admission destinée à l'air comprimé qui provient du compresseur à haute pression et une admission destinée à l'air de refroidissement qui provient du circuit de refroidissement de profil de turbine avec l'air de refroidissement qui est injecté parallèlement à l'air comprimé qui provient du compresseur à haute pression.

8. Moteur de turbine à gaz industriel à usage intensif et à large châssis selon la revendication 1, comprenant en outre :
une turbine à pression intermédiaire reliée immédiatement en aval de la turbine à haute pression et reliée à un générateur électrique à fonctionnement synchrone par un arbre de rotor intermédiaire ;
la turbine à basse pression étant entraînée par l'échappement de la turbine à pression intermédiaire, et l'arbre de rotor intermédiaire étant concentrique par rapport à la bobine à basse pression et tournant dans la bobine à basse pression ;
une évacuation du compresseur à basse pression reliée à une admission du compresseur à haute pression afin de fournir de l'air comprimé au compresseur à haute pression.

9. Moteur de turbine à gaz industriel à usage intensif et à large châssis destiné à une production d'électricité selon la revendication 1, dans lequel le moteur de turbine à gaz industriel est un moteur à 50 Hertz avec une puissance de sortie d'au moins 750 MW.

10. Moteur de turbine à gaz industriel à usage intensif et à large châssis destiné à une production d'électricité selon la revendication 1, dans lequel le moteur de turbine à gaz industriel est un moteur à 60 Hertz avec une puissance de sortie d'au moins 500 MW.

11. Moteur de turbine à gaz industriel à usage intensif et à large châssis selon la revendication 1, comprenant en outre :
une conduite d'air comprimé qui relie de manière fluide le compresseur à basse pression au compresseur à haute pression afin de fournir de l'air comprimé entre le compresseur à basse pression et le compresseur à haute pression ;
un circuit de refroidissement de pales de stator relié à la conduite d'air comprimé en aval du refroidisseur et qui traverse une rangée d'aubes de stator dans la turbine à haute pression ;
un circuit de refroidissement de pales de rotor relié à la conduite d'air comprimé en aval du refroidisseur et qui passe par une rangée de pales de rotor dans la turbine à haute pression ;
un compresseur de suralimentation situé entre le compresseur à basse pression et le circuit de refroidissement de pales de stator et le circuit de refroidissement de pales de rotor ; et
un diffuseur situé entre une évacuation du compresseur à haute pression et une admission de la chambre de combustion, le diffuseur ayant un plénum interne et un plénum externe séparés par un passage d'air comprimé provenant de l'évacuation du compresseur à haute pression, le circuit de refroidissement de pales de stator évacuant dans le plénum externe, le circuit de refroidissement de pales de rotor évacuant dans le plénum interne, et l'air de refroidissement provenant du plénum interne et du plénum externe circulant de manière sensiblement parallèle à l'air comprimé depuis le compresseur à haute pression vers la chambre de combustion.

12. Moteur de turbine à gaz industriel à usage intensif et à large châssis destiné à une production d'électricité selon la revendication 1, dans lequel la bobine à basse pression et la bobine à haute pression sont capables de fonctionner à des vitesses indépendantes l'une de l'autre.
